# EUROPEAN PATENT APPLICATION

(11) **EP 2 530 569 A1**
(43) Date of publication of application: **05.12.2012**
(21) Application number: 11004414.6
(22) Date of filing: 30.05.2011
(51) Int. Cl.: G06F 3/048

(54) **Convenient extraction of an entity out of a spatial arrangement**

(71) Applicant: ExB Asset Management GmbH, 80333 München (DE)
(72) Inventor: Assadollahi, Ramin, 81541 München (DE)
(74) Representative: Meyer, Andreas Hans

(57) **Abstract**

The present document relates to a user interface for an electronic device, in particular an electronic device comprising a touch sensitive input device. A method for controlling a touch-sensitive display (204,304,404,504) of a computing device (212, 312, 412, 512) is described. An arrangement of icons (200, 300, 400, 500) is displayed on the touch-sensitive display (204,304,404,504). The method comprises detecting a plurality of simultaneous inputs on the touch-sensitive display (204,304,404,504) at a corresponding plurality of input locations (214, 216, 314, 316, 318, 320, 414, 416, 418, 514, 516); determining that a selection condition is met; wherein determining that a selection condition is met comprises: determining that a first input of the plurality of inputs is immobile for at least a pre-determined time limit; determining that a second input of the plurality of inputs is mobile; and subject to determining that the selection condition is met, selecting an icon (202, 302, 402, 502) from the arrangement of icons (200, 300, 400, 500); wherein the selected icon is associated with a second input location (214, 314, 414, 514) of the plurality of input locations (214, 216, 314, 316, 318, 320, 414, 416, 418, 514, 516) which corresponds to the second input.

## Description

The present document relates to a user interface for an electronic device, in particular an electronic device comprising a touch sensitive input device.

On modem electronic devices, such as smart phones or tablet PCs, the user interface is finger-operated, that is the user can interact with the device and its logic of presenting information through the use of a finger rather than a mouse. The technology behind this relates to displays that are not only able to present visual pixels in a spatial array but additionally can record one or more points in the spatial array at the position where the user has placed one or more fingers. The recording of the one or more points can occur through direct touch of the one or more fingers on the touch sensitive input device and/or through proximity of the one or more fingers to the touch sensitive input device.

The present document relates to a system and method for using multiple concurrently recorded points in such a spatial array in order to make interactions more convenient and/or more time effective for the user. More specifically, the present invention allows the user to extract an entity from a defined spatial formation or arrangement more efficiently. The defined formation may be defined through neighboring entities ofthe extracted entity, e.g. through an array of displayed entities such as directories and/or files. In another example, the formation may correspond to a map displaying a spatial map such as a street map etc, wherein the displayed entities may correspond to point of interests (POI) on the spatial map. In a further example, the formation may correspond to a scrollable text comprising specifically highlighted links (e.g. possible addressees of an Email message).

According to an aspect, a method for controlling a touch-sensitive display of a computing device is described. The computing device may be e.g. a smartphone or a tablet PC. The touch-sensitive display may be configured to register one or more touch inputs, i.e. the touch-sensitive display may be configured to register one or more objects touching the surface of the touch-sensitive display. Furthermore, the touch-sensitive display may be configured to register the one or more locations on the touch-sensitive display, where the one or more objects (e.g. fingers) touch the surface of the touch-sensitive display. The one or more locations may be registered as x/y coordinates on the touch-sensitive display. Alternatively or in addition, the touch-sensitive display may be configured to register one or more proximity inputs, i.e. the touch-sensitive display may be configured to register one or more objects which are within the proximity of the touch-sensitive display. The one or more locations on the touch-sensitive display corresponding to the one or more proximity inputs may be registered (e.g. using x/y coordinates on the display).

An arrangement of icons (also referred to as indicators or indicia) may be displayed on the touch-sensitive display. The icons of the arrangement may correspond to, or represent, or be associated with data entities stored on the computing device. In other words, an icon may be a visual indicator of a corresponding data entity stored on the computing device. By way of example, the data entities may be directories, data files, program files, data records (e.g. contact data records comprising Email addresses), etc. The arrangement of icons may be displayed on the touch-sensitive display as a scrollable grid or as a scrollable map or a scrollable text.

The method may be directed at disambiguating between different input modes of the touch-sensitive display. In particular, the method may be directed at disambiguating a "scrolling" mode (where subject to an input, the arrangement of icons is scrolled on the display) and an "extracting" mode (where subject to an input, an icon is selected from the arrangement of icons and can be moved to a different location on the display). In other words, the method may be directed at disambiguating a combined "touch and move" operation which is directed at "scrolling" from a combined "touch and move" operation which is directed at "extracting". Alternatively, the method may be directed at disambiguating an "activation" mode (where subject to an input, an icon is selected and the corresponding data entity (e.g. a program file) is executed) and the "extracting" mode. As a result of the disambiguation, the user input may be effected more efficiently (e.g. more rapidly) and in a more intuitive manner.

The method may comprise detecting a plurality of substantially simultaneous inputs on the touch-sensitive display at a corresponding plurality of input locations. Typically, a touch-sensitive display is scanned for inputs at regular intervals, referred to as sampling intervals of the display. Typical values for sampling intervals may be in the range of 2 to 50ms. Substantially simultaneous inputs may be detected if the inputs are present jointly during a pre-determined number of sampling intervals. In other words, the plurality of inputs may start and/or end at different time instants, however, the plurality of inputs may be simultaneous during a pre-determined number of sampling intervals ofthe touch-sensitive display. The total number of sampling intervals during which the plurality of inputs is simultaneous may be referred to as the simultaneity interval.

The method may comprise determining that a selection condition is met. The selection condition may comprise a plurality of sub-conditions which may be linked by logical "AND"s. As such determining that a selection condition is met may comprise determining that a first input of the plurality of inputs is immobile (also referred to as motionless or static) for at least a pre-determined time limit. The pre-determined time limit may be measured in multiples of the sampling interval. Furthermore, the pre-determined time limit may lie within the simultaneity interval. The determining that a first input of the plurality of inputs is immobile for at least a pre-determined time limit may comprise determining that the first input stays within a pre-determined boundary of a corresponding first input location of the plurality of input locations for at least the pre-determined time limit. The pre-determined boundary may dependent on the resolution and/or sensitivity of the touch-sensitive display. It may be defined as an envelope around the first input location, e.g. a circle around the first input location having a pre-determined radius).

Alternatively or in addition, determining that a selection condition is met may comprise determining that a second input of the plurality of inputs is mobile (also referred to as "moving"). The fact that the second input is mobile may be determined within the above mentioned pre-determined time limit. Determining that a second input of the plurality of inputs is mobile may comprise determining that the second input moves out of a pre-determined boundary of a corresponding second input location of the plurality of input locations, e.g. within the pre-determined time limit. The pre-determined boundaries of the first and second input location may correspond to envelopes (e.g. circles) around the first and second input location, respectively. The size of the envelopes (e.g. the radii of the circles) may be the same for the first and second input location.

Overall, the first and the second input may be observed and it may be determined if there is a time interval (having the length of the pre-determined time limit), during which the first input may be classified as "immobile" and the second input may be classified as "mobile".

The method may comprise subject to determining that the selection condition is met, selecting an icon from the arrangement of icons. The selected icon may be associated with the second input location of the plurality of input locations which corresponds to the second input. In particular, the selected icon may correspond to an icon of the arrangement of icons which is displayed in proximity of the second input location. The selected icon may be the icon from the arrangement of icons which is closest to the second input location.

As indicated above, the selection condition may comprise several sub-conditions. As such, determining that a selection condition is met may further comprise determining that a first input location (which corresponds to the first input) lies within a pre-determined immobility area of the touch-sensitive display. In other words, a particular area (referred to as the immobility area) may be designated as the area on the display, where the first (immobile) input should occur in order to allow for a selection of an icon using the second (mobile) input. The immobility area may be explicitly displayed on the touch-sensitive display.

The method may comprise detecting that the second input moves outside of a pre-determined boundary of the second input location. Subject to this detection, the selected icon may be moved on the touch-sensitive display in accordance to the movement of the second input. In other words, the selected icon may be extracted from the arrangement of icons displayed on the touch-sensitive display. The pre-determined boundary may correspond to the above mentioned envelope around the second input location. Alternatively, the pre-determined boundary (e.g. a circle) used for determining if an input is mobile or immobile may be different from (smaller than) the pre-determined boundary (e.g. a circle having a different radius) used for detecting "extraction" of the selected icon.

The method may proceed in detecting that the second input is moved to a target area on the touch-sensitive display. The target area may be associated with a target application executed on the computing device (e.g. a media player with the selected icon being a media file). Subject to detecting an interruption of the second input at the target area, the selected icon may be associated with the target area. In particular, the selected icon may be associated with the target application associated with the target area (e.g. the media file may be added to a playlist of the media player). The interruption of the second input may be the interruption of the touch input (thereby interrupting the touch input) or it may be the increasing ofthe distance to the touch-sensitive display (thereby interrupting the proximity input).

The plurality of inputs may comprise more than two inputs. In particular, the plurality of inputs may comprise a plurality of mobile inputs. The method may further comprise subject to determining that the selection condition is met and subject to determining that a third input of the plurality of inputs is mobile, selecting a plurality of icons from the arrangement of icons. In other words, the selection condition may be extended to a plurality of mobile inputs, thereby enabling the simultaneous selection of a plurality of icons. The plurality of selected icons may be associated with the second input location and a third input location of the plurality of input locations. The third input location may correspond to the input location of the third input. In other words, the plurality of selected icons may be associated with the plurality of mobile inputs (and their corresponding locations).

The plurality of selected icons may be determined from the arrangement of icons in various manners. By way of example, the plurality of selected icons may comprise the icons displayed at the second and third input locations. In other words, the plurality of selected icons may comprise the icons displayed at the plurality of locations corresponding to the plurality of mobile inputs. In particular, the number of selected icons may correspond to the number of mobile inputs, i.e. each mobile input may select a corresponding icon (e.g. the icon closest to the location of the mobile input). Alternatively, the plurality of selected icons may comprise icons displayed in a rectangle of the touch-sensitive display having edges which correspond to the second and third input locations. As such, the locations corresponding to the plurality of mobile inputs may define an area (e.g. a rectangle) of the touch-sensitive display and all icons of the arrangement of icons falling within this area may be selected.

As indicated above, the method may be directed at disambiguating different input modes of the touch-sensitive display. For this purpose, the method may determine if a selection condition is met or not met. If the selection condition is met, the "extracting" mode may be activated. On the other hand, if the selection condition is not met, a different mode, e.g. the "scrolling" mode or the "activation" mode may be activated. As such, the method may comprise subject to determining that the selection condition is not met, scrolling the arrangement of icons in accordance with the plurality of inputs.

According to another aspect, a computing device comprising a touch-sensitive display is described. The touch-sensitive display may be configured to display an arrangement of icons. Furthermore, the touch-sensitive display may be configured to detect a plurality of simultaneous inputs on the touch-sensitive display at a corresponding plurality of input locations. In addition, the touch-sensitive display may be configured to be operated in different input modes, such as an "extracting" mode or a "scrolling" mode. For this purpose, the touch-sensitive display may be configured to determine that a selection condition is met. The selection condition may comprise a plurality of sub-conditions. In particular, determining that a selection condition is met may comprise determining that a first input of the plurality of inputs is immobile for more than a pre-determined time limit and determining that a second input of the plurality of inputs is mobile. Subject to determining that the selection condition is met, the touch-sensitive display may be configured to select an icon from the arrangement of icons. The selected icon may be associated with a second input location of the plurality of input locations which corresponds to the second input.

According to a further aspect, a software program is described. The software program may be stored on a computer-readable medium (which may be tangible or otherwise non-transitory) as instructions that are adapted for execution on a processor and for performing the aspects and features outlined in the present document when carried out on a computing device.

According to another aspect, a storage medium comprising a software program is described. The storage medium may be memory (e.g. RAM, ROM, etc.), optical media, magnetic media and the like. The software program may be adapted for execution on a processor and for performing the aspects and features outlined in the present document when carried out on a computing device.

According to a further aspect, a computer program product is described. The computer program product may comprise executable instructions for performing the aspects and features outlined in the present document when executed on a computing device.

It should be noted that the methods and systems including its preferred embodiments as outlined in the present document may be used stand-alone or in combination with the other methods and systems disclosed in this document. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein
Fig. 1 illustrates an example user interface of a touch sensitive input/output device showing a scrollable grid;
Fig. 2 illustrates the example user interface of Fig. 1 involving a constant touch point;
Fig. 3 illustrates the example user interface of Fig. 2 involving multiple moving touch points;
Fig. 4 illustrates the example user interface of Fig. 2 involving two moving touch points defining an input rectangle; and
Fig 5 illustrates an example user interface of a touch sensitive input/output device showing a scrollable map.

As outlined above, the present document relates to providing an efficient user interface for touch sensitive input/output devices. A concrete application of the present invention relates to the problem of selecting an icon from a grid of icons in order to move the selected icon to a different place on the screen while keeping the other icons in place. In conventional user interface systems, the user has to long-press the icon to make the icon "movable". The short-press of the icon is typically used for a different, more frequent action such as the starting of the application which corresponds to the icon. A long-press in this context means that the user uses one finger to touch the screen at the position where the icon is located for a longer duration than for a short press. A long-press may be specified as having a touch duration longer than a pre-determined duration threshold, e.g. 700ms, whereas touch durations shorter than the pre-determined duration threshold may be considered as a short-press. One skilled in the art will acknowledge that other values may be selected for the duration threshold. Nevertheless, the duration threshold is typically selected sufficiently high, in order to allow for a reliable distinction between the short-press and the long-press

The above distinction between a long-press and a short-press is only convenient (i.e. efficient) for the user when short-presses occur much more frequently during normal operation of the system than long-presses. However, when interactions with the system have equal frequencies for the movement of the icon and for the start of the application, the disambiguation of the input according to the touch duration will be inconvenient because the user has to wait (for at least a time corresponding to the duration threshold) until the system has recognized the intended input associated with the long-press.

A similar problematic situation occurs in the so-called "scrolling" of a grid of icons versus the extraction of an icon in order to move the icon independently from the other icons in the grid. Usually, the process of touching the screen at the location of an icon, of keeping the finger on the screen and of dragging the icon in order to scroll the whole grid is the more frequent interaction, whereas the process of extracting an icon from the grid of icons is more rare. Consequently, the "scrolling" operation is typically initiated by touching the location of an icon within the scrollable grid of icons and by starting to move the touching object (e.g. the finger) on the display. On the other hand, the "extracting" operation is initiated by a long-press of the icon which is to be extracted (without moving the touching object). Extraction may be defined in this context as the intention of the user to separate the extracted icon from its surrounding icons within a grid of icons. Extraction may be required when the user wants to select sequentially icons from a grid of icons in order to add them into a list. By way of example, a user may extract audio files from a grid of audio files, in order to generate a playlist.

In use cases where the "extracting operation" is more frequent than, or as frequent as the "scrolling operation", the interaction and disambiguation based on a distinction between a long-press and a short-press is inconvenient for the user.

A further scenario for the extraction may be a map where multiple icons (e.g. multiple points of interests on the map) are displayed in a graphical context rather than on a grid, e.g. icons may depict houses in a street map. If the user wants to extract icons frequently from the map, and if the user also wants to scroll frequently through the map, the input disambiguation based on a short-press and a long-press may be inconvenient.

Another scenario is the display of a "scrollable" text, such as a web page or an Email message. The scrollable text may comprise a plurality of links or hyperlinks which may be selectable and/or extractable by a user. By way of example, a displayed Email message may comprise a plurality of icons which represent possible addressees of a new Email message or which represent the sender of the displayed Email message. A user may want to scroll the message in order to identify a particular icon (representing an addressee or the sender). Furthermore, the user may want to select and extract one or more of the icons, in order to place the one or more icons into a target area. The target area may be associated with a new Email message, thereby allowing the user to compose the list of addressees of the new Email message. Alternatively, the target area may be associated with a filter application, thereby allowing the user to filter out all Email messages which are associated with the extracted list of icons, e.g. all Email messages sent by a list of people corresponding to the extracted list of icons. In addition, the user may want to select an icon and thereby activate a particular application associated with the icon (e.g. opening an Email message which only comprises the selected icon as addressee). These operations may be attributed to a short-press and/or a long-press. However, depending on the frequency of use of the different operations, the input disambiguation based on a short-press and a long-press may be inconvenient and inefficient.

In view of the above shortcomings of conventional user interfaces, the present document describes a system and a method which records a second touch point on the touch screen that may be used by the system and method to disambiguate the input of a first touch point. In particular, the second touch point may be used to interpret the first touch point as a touch point which relates to the extraction of an icon displayed at the first touch point.

In an embodiment, the second touch point is kept constant in a fixed location, whereas the first touch point may move in accordance to the intended user input. In this way the system is able to disambiguate which of the two points corresponds to the first touch point, i.e. the point which identifies the corresponding icon for movement.

It should be noted that the same logic may also be applied to multiple moving touch points, i.e. multiple first touch points, so that the user may keep one finger constant on the screen in order to disambiguate between a "scrolling operation" and an "extracting" operation. By way of example, by keeping one finger at a fixed location on the screen, the user may indicate that the "extracting" operation should be used. At the same time a plurality of fingers may be moved around on the screen, in order to move corresponding icons, one per finger, and in order to extract the corresponding icons out of the spatial arrangement. By way of example, two album covers in a spatial arrangement of 3x3 album covers may be extracted using two fingers and may be moved into a playlist depicted somewhere else on the screen.

As such, the present document addresses the inconvenience for a user of an electronic device to wait for the system to recognize the intended input. More precisely, the present document removes the inefficiency related to the categorization of press durations, as the described methods and systems simply register multiple touch points on the screen. The touch point of the multiple touch points which does not change its location over time is not used for an "extracting" or "scrolling" operation but is used for disambiguation purposes, in particular the disambiguation between the "extracting" or "scrolling" operations. Thus the user's intention to extract one or more entities out of a spatial arrangement can be recognized almost instantly, i.e. after a limited number of sampling instants of the touch screen.

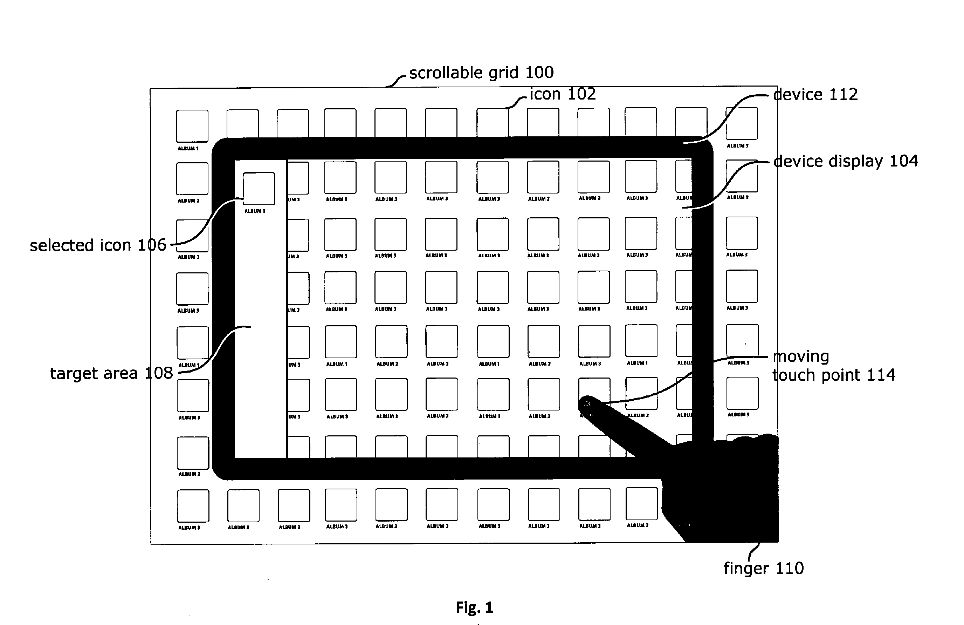

In Fig 1, an example user interface of an electronic device 112 is illustrated. The electronic device comprises a touch sensitive display 104. Fig. 1 shows a scrollable grid 100 of icons which can be moved using the detection of the user's finger 110. The grid 100 typically moves in correspondence to the finger 110 movements detected on a moving touch point 114 relative to the device display 104. By moving the grid 100 different parts of the spatial arrangement of icons 102 are revealed. Usually, the amount of icons 102 of a scrollable grid 100 to be displayed is too large for the display 104 so that only a fraction of the grid 100 can be displayed on the display 104. The movement of the grid 100 can be achieved by touching an icon or a space between the icons with a finger 110 (using e.g. a short-touch) and by moving the finger 110 across the display 104.

In conventional user interface systems the user would need to long-press an icon in order to indicate to the system that it is the intention of the user to select and to move only the selected icon. By way of example, the extracted icon (or a copy of the icon) may be moved to a target area 108 which can be a list or an area on the display 104 and which is reserved for selected icons 106. This target area 108 will typically not move with the grid 100. Usually, in order to select another icon, the user has to also long-press the another icon prior to being able to extract the icon from the grid 100. This makes the selection of a high number of icons 102, e.g. in order to build a playlist for a music player, strenuous.

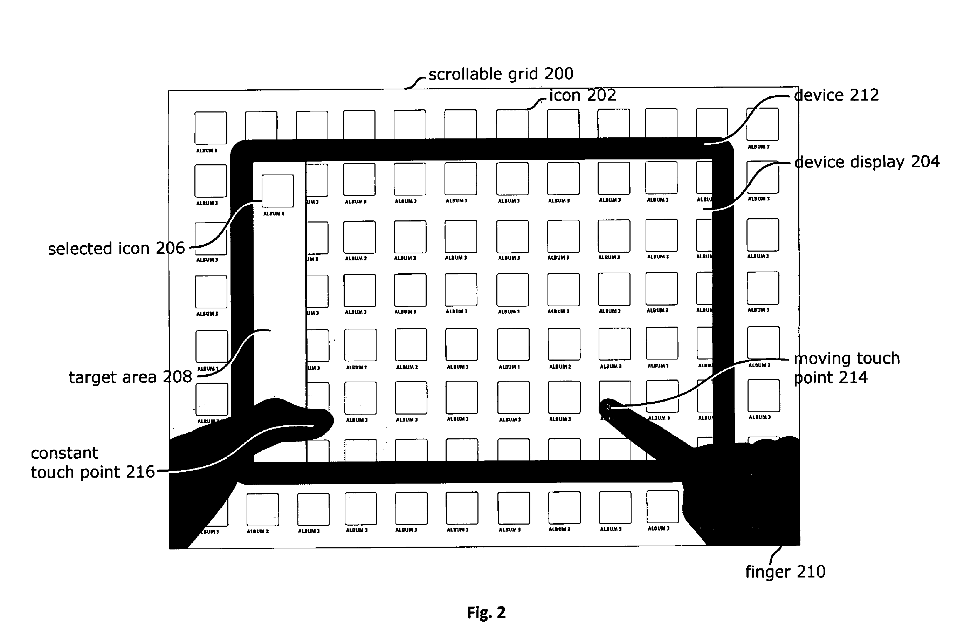

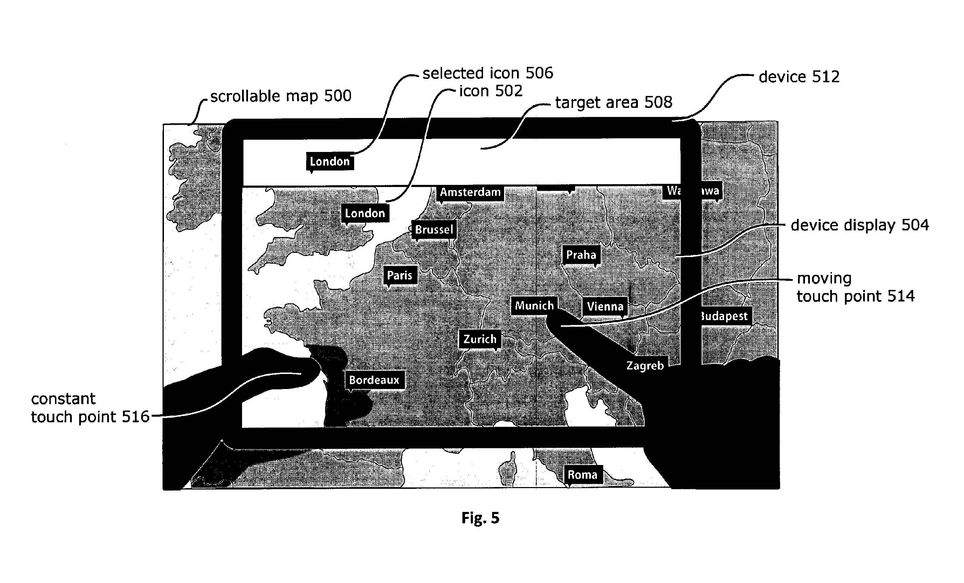

The user interface described in the present document departs from the user interface of Fig. 1 in that it uses the registration of a second touch point 216 (as shown e.g. in Fig 2). Fig. 2 illustrates a scrollable grid 200 comprising a plurality of icons 202 which is displayed on the display 204 of the computing device 212. The user may hold the device 212 in the way indicated in Fig. 2, i.e. the user may hold the device 212 in his left hand. In this case, the user may use his thumb to generate the second touch point 216 on the device display 204. The second touch point 216 may be used to disambiguate different functions performed by the first touch point 214. By way of example, for the system to interpret the intention of a moving touch point 214 generated by the moving finger 210, it is sufficient to register the presence or the absence of a second non-moving touch point 216. If the presence of a second non-moving touch point 216 is registered, the system may interpret the icon underneath the moving touch point 214 as an icon that has to be moved or extracted. The user may move the icon underneath the moving touch point 214 to the target area 208. When lifting the finger which generates the moving touch point 214 in the target area 208, the user indicates that the icon 206 should be "dropped" into the target area 208. It should be noted that the shape, position and size of the target area 208 can change without departing from the scope of the invention (as shown for example in Fig 5, target area 508). Moreover, there may also be more than one target area possibly for different user intentions (e.g. "icons to be used as an attachment", "icon to be played in a media player", etc.).

As such, a non-moving touch point 216 is used to disambiguate between two states. In a first state (e.g. associated with the absence of a non-moving touch point 216), the moving touch point 214 is interpreted by the system as a "scrolling" operation of the scrollable grid 200. In a second state (e.g. associated with the presence of a non-moving touch point 216), the moving touch point 214 is interpreted by the system as an "extracting" operation of an icon which is associated with the moving touch point 214 (e.g. the icon which is positioned underneath the moving touch point 214 when initially touching the display 204). The second state allows for a particularly intuitive way of performing an "extracting" operation. The non-moving touch point 216 may be viewed by a user as the action of "holding" or "fixing" the scrollable grid 200 in a fixed position, whereas the moving touch point 214 may be viewed by the user as "pulling out" the selected icon from the grid 200 which is held by the non-moving touch point 216. As such, the proposed user-interface makes available the "extracting" operation in an intuitive way.

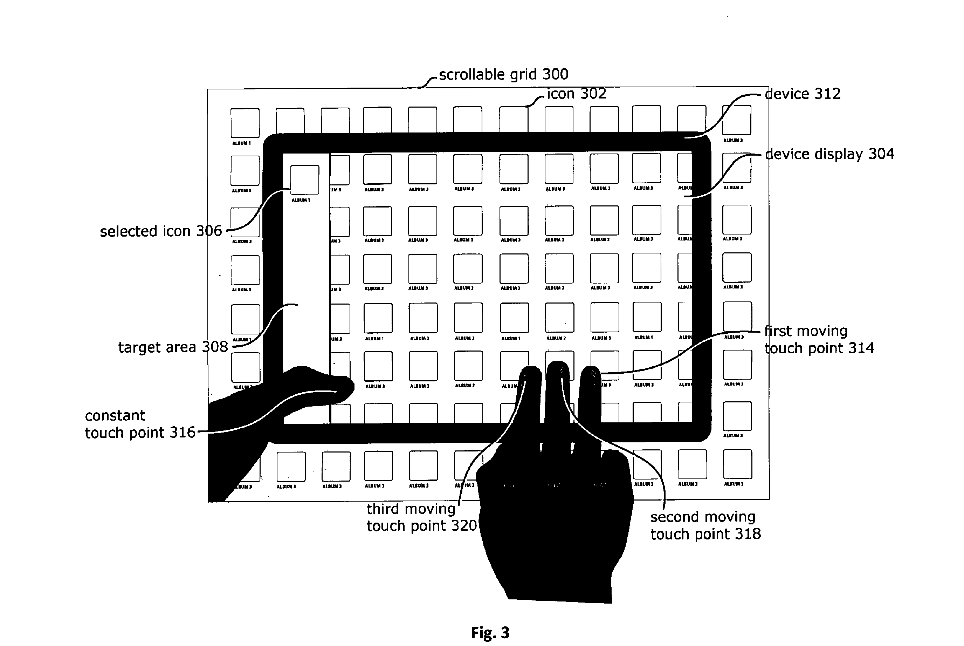

This logic of constant vs. moving touch point distinction can be extended: Through the registration of multiple moving touch points, it may be possible to use multiple fingers in order to select and to move multiple icons at the same time. This is depicted in Fig 3, where three icons 302 of the grid 300 are selected by three fingers defining three moving touch points 314, 318 and 320. At the same time, a non-moving touch point 316 may be registered by the system, thereby interpreting the multiple moving touch points 314, 318, 320 as "extracting" operation of the three icons associated with the three moving touch points 314, 318,320.

The multiple icons may be moved into the target area 308 by moving the associated moving touch points 314, 318, 320 to the target area. In an alternative embodiment, the multiple icons may be logically connected and it may be sufficient to move one of the touch points 314, 318, 320 into the target area 308 to indicate to the system that all the selected icons 306 should be placed into the target area 308. The "dropped" icons 306 may be rearranged within the target area 308 in order to fit into the shape of the target area 308 displayed on the display 304 of the device 312. Furthermore, it should be noted that in the scenario of Fig. 3, it may not be necessary that the icons are placed in vicinity or adjacent to one another, as the moving fingers may be positioned at icons in different places.

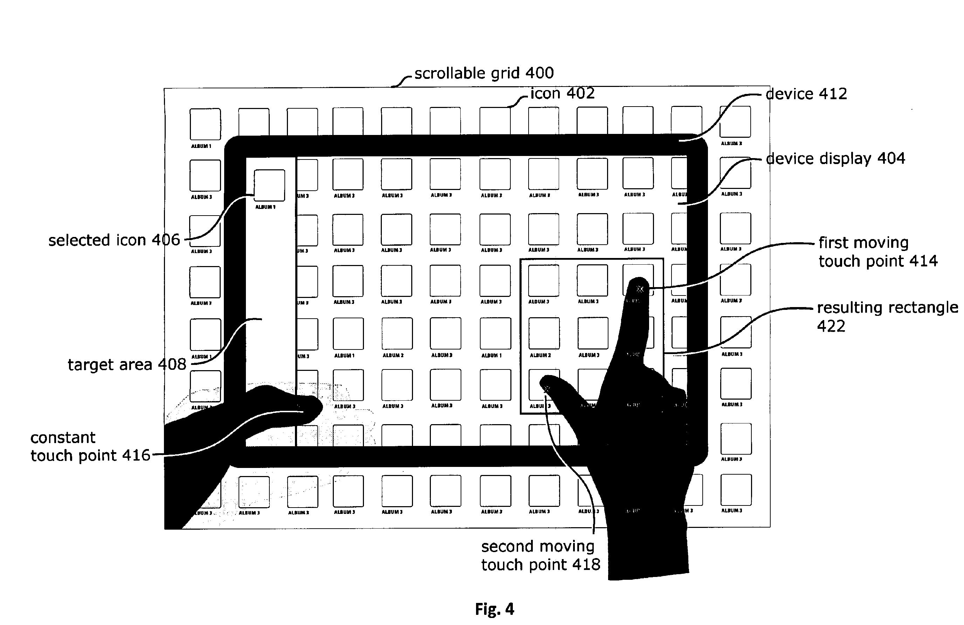

When the -to be selected- icons are in one (roughly horizontal) row, the two or more fingers selecting the icons can be placed as illustrated in Fig 3. However, the system may also be able to use two moving touch points 414 and 418 and to interpret the moving touch points 414, 418 as a start point and as an end point of a selection area, respectively. This differs from the semantic used in Fig. 3, where each touch point 314, 318, 320 is used as a selector for a distinct icon. If the moving touch points 414, 418 are on a horizontal row, all icons 402 on the grid 400 between the two touch points 414, 418 may be selected for extraction. If the two touch points 414, 418 are not in one horizontal row, all icons within the rectangle 422 defined by the two touch points 414, 418 may be selected as illustrated in Fig 4. In this case, all icons 406 placed within the rectangle 422 which is defined by the initial touch positions would be selected and moved to the target area 408. The rectangle 422 may be presented to the user on the display 404 of the device 402 in order to indicate which icons have been selected. As already outlined above, it may be sufficient to move one of the icons (i.e. the corresponding touch point 414, 418) to a target area 408. In a similar manner to Figs. 2 and 3, the disambiguation between a "scrolling" operation and an "extracting" operation is performed by the absence or the presence of a non-moving touch point 416

Fig 5 illustrates that the spatial arrangement of icons 502 does not necessarily have to be in a grid arrangement. The selectable icons 502, 506 may e.g. be placed on a scrollable map 500 which is displayed on the display 504 of the device 512. By way of example, the selectable icons 502, 506 may be locations (e.g. cities) on the scrollable map 500. The "scrolling" operation and the "extracting" operation may be disambiguated using a non-moving touch point 516. One or more moving touch points 514 may be used to extract one or more icons 502, 506 and to move the one or more icons 502, 506 to a target area 508 on the display 504 of the device 512.

In a similar manner to the scrollable map depicted in Fig. 5, the arrangement of icons may be arranged within a scrollable text such as a web page or an Email message. The arrangement of icons may be represented as specifically highlighted links within the text. The user may scroll through the text or the user may selected and extract an icon (e.g. in order to compose the addressee list of a new Email message). The "scrolling" operation and the "extracting" operation may be disambiguated using a non-moving touch point (such as the non-moving touch point 516). One or more moving touch points may be used to selected and extract one or more icons (or indicia) and to move the one or more icons to a target area on the display of the device. By way of example, the target area may be associated with a filter application, e.g. a filter of Email messages stored on the device. Depending on the extracted icons within the target area, different sets of Email messages may be filtered from the Email messages stored on the device. For example, all Email messages which have been sent by the people represented by the selected one or more icons may be identified by the filter application.

As outlined above, the user-interface described in the present document may be implemented on a touch-sensitive display. The touch-sensitive display should be configured to detect a plurality of simultaneous touch and/or proximity inputs. Such touch-sensitive displays may comprise resistive touch-screens which comprise two flexible sheets coated with a resistive material and separated by an air gap or microdots. When contact is made to the surface of the touch-screen, the two sheets are pressed together. Typically, there are horizontal and vertical lines on the two sheets, which - when pushed together - register the location of the touch. Alternatively or in addition, the touch-sensitive displays may comprise capacitive components which sense the proximity of an object via changing capacitive values. Alternatively or in addition, optical touch technology may be used. The optical touch technology is based on the principle that a fmger or an object touching the surface causes light to scatter. The reflection of the scattered light may be caught with sensors or cameras that produce data for determining the location of the touch, depending on the type of reflection measured. The user-interface described in the present document may be implemented on touch-sensitive displays comprising these or other technologies in order to register a plurality of simultaneous inputs.

In the present document, a user-interface for a touch sensitive device has been described. The user-interface allows for a more time efficient distinction between an "extracting" operation and other operations (e.g. a "scrolling" operation or an "executing" operation) performed on a displayed list of icons. This is achieved by determining the presence of a non-moving touch point in addition to a moving touch point. This allows for a more intuitive and more time-efficient disambiguation than the conventional disambiguation based on a distinction between a short-press and a long-press.

It should be noted that the description and drawings merely illustrate the principles of the proposed methods and systems. It will thus be appreciated that those skilled in the art will be able to devise various arrangements that, although not explicitly described or shown herein, embody the principles of the invention.

Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. A method for controlling a touch-sensitive display (204,304,404,504) of a computing device (212, 312, 412, 512); wherein an arrangement of icons (200, 300, 400, 500) is displayed on the touch-sensitive display (204,304,404,504), the method comprising
- detecting a plurality of simultaneous inputs on the touch-sensitive display (204,304,404,504) at a corresponding plurality of input locations (214, 216, 314, 316, 318, 320, 414, 416, 418, 514, 516);
- determining that a selection condition is met; wherein determining that a selection condition is met comprises:
- determining that a first input of the plurality of inputs is immobile for at least a pre-determined time limit;
- determining that a second input of the plurality of inputs is mobile; and
- subject to determining that the selection condition is met, selecting an icon (202, 302, 402, 502) from the arrangement of icons (200, 300, 400, 500); wherein the selected icon is associated with a second input location (214, 314, 414, 514) ofthe plurality of input locations (214, 216, 314, 316, 318, 320, 414, 416, 418, 514, 516) which corresponds to the second input.

2. The method of claim 1, wherein determining that a selection condition is met further comprises determining that a first input location (216, 316, 416, 516) corresponding to the first input lies within a pre-determined immobility area ofthe touch-sensitive display (204,304,404,504).

3. The method of any previous claim, wherein the arrangement of icons (200, 300, 400, 500) is displayed on the touch-sensitive display (204,304,404,504) as
- a scrollable grid (200, 300, 400); or
- a scrollable map (500); or
- a scrollable text.

4. The method of any previous claim, further comprising:
- detecting that the second input is moving outside a pre-determined boundary ofthe second input location (114, 214, 314, 414, 514); and
- moving the selected icon on the touch-sensitive display (204,304,404,504) in accordance to the movement of the second input.

5. The method of claim 4, further comprising:
- detecting that the second input is moved to a target area (208, 308, 408, 508) on the touch-sensitive display (204,304,404,504);
- detecting an interruption of the second input at the target area (208, 308, 408, 508); and
- associating the selected icon with the target area (208, 308, 408, 508).

6. The method of any previous claim, wherein the plurality of inputs comprises more than two inputs; the method further comprising
- subject to determining that the selection condition is met and subject to determining that a third input of the plurality of inputs is mobile, selecting a plurality of icons (202, 302, 402, 502) from the arrangement of icons (200, 300, 400, 500); wherein the plurality of selected icons (200, 300, 400, 500) is associated with the second input location (314, 414) and a third input location (318, 418) ofthe plurality of input locations (214, 216, 314, 316, 318, 320, 414, 416, 418, 514, 516); wherein the third input location (318, 418) corresponds to the third input.

7. The method of claim 6, wherein
- the plurality of selected icons comprises icons displayed at the second and third input locations (314, 318, 320); or
- the plurality of selected icons comprises icons displayed in a rectangle (422) ofthe touch-sensitive display (204,304,404,504) having edges which correspond to the second and third input locations (314, 318, 320).

8. The method of any previous claim, wherein the plurality of inputs comprises
- a touch input, registering an object touching the touch-sensitive display (204,304,404,504); and/or
- a proximity input, registering an object within the proximity of the touch-sensitive display (204,304,404,504).

9. The method of any previous claim, further comprising
- subject to determining that the selection condition is not met, scrolling the arrangement of icons (200, 300, 400, 500) in accordance with the plurality of inputs.

10. The method of any previous claim, wherein
- determining that a first input of the plurality of inputs is immobile for at least a pre-determined time limit comprises determining that the first input stays within a pre-determined boundary of a corresponding first input location (216, 316, 416, 516) of the plurality of input locations (214, 216, 314, 316, 318, 320, 414, 416, 418, 514, 516) for at least the pre-determined time limit; and/or
- determining that a second input of the plurality of inputs is mobile comprises determining that the second input moves out of a pre-determined boundary of a corresponding second input location (214, 314, 414, 514) of the plurality of input locations (214, 216, 314, 316, 318, 320, 414, 416, 418, 514, 516) within the pre-determined time limit.

11. A computing device (212, 312, 412, 512) comprising a touch-sensitive display (204,304,404,504), wherein the touch-sensitive display (204,304,404,504) is configured to
- display an arrangement of icons (200, 300, 400, 500);
- detect a plurality of simultaneous inputs on the touch-sensitive display (204,304,404,504) at a corresponding plurality of input locations (214, 216, 314, 316, 318, 320, 414, 416, 418, 514, 516);
- determine that a selection condition is met; wherein determining that a selection condition is met comprises:
- determining that a first input of the plurality of inputs is immobile for more than a pre-determined time limit;
- determining that a second input of the plurality of inputs is mobile; and
- subject to determining that the selection condition is met, select an icon (202, 302, 402, 502) from the arrangement of icons (200, 300, 400, 500); wherein the selected icon is associated with a second input location (214, 314, 414, 514) of the plurality of input locations (214, 216, 314, 316, 318, 320, 414, 416, 418, 514, 516) which corresponds to the second input.

12. A software program adapted for execution on a processor and for performing the method steps of either one of claims 1 to 10 when carried out on a computing device.

13. A storage medium comprising a software program adapted for execution on a processor and for performing the method steps of either one of claims 1 to 10 when carried out on a computing device.

14. A computer program product comprising executable instructions for performing the method of either one of claims 1 to 10 when executed on a computer.
